(19) Europäisches Patentamt

European Patent Office

Office européen des brevets

(11) **EP 0 601 790 B1**

(12) **EUROPEAN PATENT SPECIFICATION**

(45) Date of publication and mention
of the grant of the patent:
**17.06.1998 Bulletin 1998/25**

(51) Int. Cl.$^6$: **B32B 25/14**, B32B 27/32

(21) Application number: **93309617.4**

(22) Date of filing: **01.12.1993**

(54) **Two-layer sheets of thermoplastic elastomers**

Zweischichtige Folien aus thermoplastische Elastomere

Feuilles à deux couches en élastomère thermoplastique

(84) Designated Contracting States:
**DE FR GB IT NL**

(30) Priority: **01.12.1992 JP 321669/92**

(43) Date of publication of application:
**15.06.1994 Bulletin 1994/24**

(73) Proprietor:
**MITSUI CHEMICALS, INC.**
**Tokyo (JP)**

(72) Inventors:
  • **Uchiyama, Akira,**
    **c/o Mitsui Petrochemical Ind.,Ltd**
    **Ichihara-shi, Chiba 299-01 (JP)**

  • **Hamada, Shunichi**
    **c/o Mitsui Petrochemical Ind. Ltd**
    **Chiyoda-ku Tokyo 100 (JP)**

(74) Representative:
    **Cresswell, Thomas Anthony et al**
    **J.A. Kemp & Co.**
    **14 South Square**
    **Gray's Inn**
    **London WC1R 5LX (GB)**

(56) References cited:
    **EP-A- 0 143 131          EP-A- 0 360 475**
    **EP-A- 0 360 577          EP-A- 0 493 947**

**Description**

This invention relates to two-layer sheets composed of thermoplastic elastomers, and more particularly the invention relates to two-layer sheets composed of thermoplastic elastomers excellent in vacuum forming properties and also capable of providing molded products low in surface glossiness.

So far, polyvinyl chloride has been widely used as a material for interior automotive trim. In the interior automotive trim obtained by using only polyvinyl chloride, however, there were involved such problems concerning physical properties of the thus obtained interior automotive trim as heat resistance, cold temperature resistance, thermal aging resistance, light resistance, anti-fogging properties, and odor. Accordingly, polyolefin thermoplastic elastomers excellent in such properties as mentioned above have come to be hopefully regarded as substitutes for polyvinyl chloride resins.

Of the polyolefin thermoplastic elastomers referred to above, however, those having been partially crosslinked (hereinafter called sometimes "partially crosslinked polyolefin thermoplastic elastomers) had such a drawback that they are inferior in vacuum forming properties to polyvinyl chloride resins.

Accordingly, it was necessary to decrease the content of rubber component in partially crosslinked thermoplastic polyolefin elastomers to be used or use **non-crosslinked** polyolefin thermoplastic elastomers instead of the partially crosslinked polyolefin thermoplastic elastomers.

However, molded products obtained by vacuum forming from partially crosslinked polyolefin thermoplastic elastomer sheets had such drawbacks that the products thus obtained are high in hardness and poor in the sense of soft touch. On the other hand, molded products obtained by vacuum forming from **non-crosslinked** polyolefin thermoplastic elastomer sheets involved such problems that the products thus obtained are insufficient in heat resistance, rubberlike properties such as elastic recovery, impact resilience, etc., and also that said products are high in surface glossiness, thus giving no low surface glossiness as desired.

Accordingly, after extensive researches conducted on the problems as mentioned above, the present inventors have subjected to vacuum forming a two-layer sheet consisting of a skin layer composed of a partially crosslinked thermoplastic elastomer containing an $\alpha$-olefin copolymer rubber and polyolefin resin in a specific proportion and a back surface layer composed of a **non-crosslinked** thermoplastic elastomer containing an $\alpha$-olefin copolymer rubber and polyolefin resin in a specific proportion, whereupon it has been found that the sheet is excellent in vacuum forming properties, and that molded products low in surface glossiness can be obtained therefrom, thus the present invention has been accomplished on the basis of the above-mentioned findings.

The present invention is intended to solve the problems associated with the prior art as mentioned above, and an object of the invention is to provide two-layer sheets of thermoplastic elastomers excellent in vacuum forming properties and also capable of giving molded products low in surface glossiness.

The first two-layer sheets of thermoplastic elastomer of the present invention are characterized by comprising a skin layer [I] composed of a partially crosslinked thermoplastic elastomer containing 90-40 parts by weight of an $\alpha$-olefin copolymer rubber (A) and 10-60 parts by weight of a polyolefin resin (B), with the proviso that the sum total amount of (A) and (B) is 100 parts by weight, and a back surface layer [II] composed of a **non-crosslinked** thermoplastic elastomer containing 80-30 parts by weight of an $\alpha$-olefin copolymer rubber (A) and 20-70 parts by weight of a polyolefin resin (B), with the proviso that the sum total amount of (A) and (B) is 100 parts by weight.

The second two-layer sheets of thermoplastic elastomer of the invention are characterized by comprising a skin layer [I] composed of a blend containing 100 parts by weight of a partially crosslinked thermoplastic elastomer containing 90-40 parts by weight of an $\alpha$-olefin copolymer rubber (A) and 10-60 parts by weight of a polyolefin resin (B), with the proviso that the sum total of (A) and (B) is 100 parts by weight, and 5-100 parts by weight of a polyolefin resin (C), and a back surface layer [II] composed of a **non-crosslinked** thermoplastic elastomer containing 80-30 parts by weight of an $\alpha$-olefin copolymer rubber (A) and 20-70 parts by weight of a polyolefin resin (B).

The two-layer sheets of thermoplastic elastomer of the present invention are illustrated below in detail.

The two-layer sheets of thermoplastic elastomer of the invention are formed from a skin layer [I] composed of a partially crosslinked thermoplastic elastomer containing an $\alpha$-olefin copolymer rubber (A) and a polyolefin resin (B) in a specific proportion and a back surface layer [II] composed of a **non-crosslinked** thermoplastic elastomer containing an $\alpha$-olefin copolymer rubber (A) and a polyolefin resin (B) in a specific proportion.

Moreover, the skin layer [I] in the invention may be composed of a blend obtained by blending the above-mentioned partially crosslinked thermoplastic elastomer and a polyolefin resin (C) in a specific proportion.

The $\alpha$-olefin copolymer rubber (A) used in the invention is an amorphous elastomeric polymer such as ethylene/propylene copolymer rubber, propylene/ethylene copolymer rubber, ethylene/propylene non-conjugated copolymer rubber, propylene/ethylene non-conjugated rubber, ethylene/butadiene copolymer rubber or propylene/butadiene copolymer rubber. The $\alpha$-olefin copolymer decreases in flow characteristics or does not flow when the $\alpha$-olefin copolymer is mixed with an organic peroxide and kneaded with heat to be crosslinked.

By non-conjugated diene as used herein is meant dicyclopentadiene, 1,4-hexadiene, dicyclooctadiene, methylene norbornene, ethylidene norbornene, etc.

Of these copolymer rubbers illustrated above, preferred are ethylene/propylene/non-conjugated diene copolymer rubbers, particularly ethylene/propylene/ethylidene norbornene copolymer rubbers, from the standpoint of giving molded products of thermoplastic elastomers excellent in heat resistance, tensile characteristics and impact resilience.

Further, the copolymer rubbers mentioned above preferably have a Mooney viscosity [$ML_{1+4}$ (100°C)] of 10-120, particularly 40-80. By the use of the above-mentioned copolymer rubbers having a Mooney viscosity falling within the above-mentioned range, there are obtained molded products of thermoplastic elastomers excellent in tensile characteristics.

Furthermore, the above-mentioned copolymer rubbers preferably have an iodine value (degree of unsaturation) of not more than 16.

The polyolefin resin (B) used in the invention includes, for example, a homopolymer of ethylene or propylene, or copolymers of ethylene or propylene with small amounts of other polymeric monomers, for example, a propylene/ethylene copolymer, propylene/1-butene copolymer, propylene/1-hexene copolymer, propylene/4-methyl-1-pentene copolymer, etc.

The small amounts of other polymeric monomers include concretely vinyl acetate, ethyl acrylate, methacrylic acid, etc. In the present invention, a melt flow rate of the polyolefin resin (ASTM-D-1238-65T, 230°C) of the polyolefin resins is preferably 0.1-100 g/10 min, particularly 5-50 g/10 min.

In the partially crosslinked thermoplastic elastomer of the skin layer [I] constituting the two-layer sheet of thermoplastic elastomer of the present invention, the $\alpha$-olefin copolymer rubber (A) is used in an amount of 90-40 parts by weight, preferably 85-45 parts by weight and especially 80-50 parts by weight based on the sum total 100 parts by weight of the $\alpha$-olefin copolymer rubber (A) and polyolefin resin (B), and similarly the polyolefin resin (B) is used in an amount of 10-60 parts by weight, preferably 15-55 parts by weight and especially 20-50 parts by weight.

In the **non-crosslinked** thermoplastic elastomer of the back surface layer [II] constituting the two-layer sheet of thermoplastic elastomer of the invention, the $\alpha$-olefin copolymer rubber (A) is used in an amount of 80-30 parts by weight, preferably 75-35 parts by weight and especially 70-40 parts by weight based on 100 parts by weight of the sum total 100 parts by weight of the $\alpha$-olefin copolymer rubber (A) and polyolefin resin (B), and similarly the polyolefin resin (B) is used in an amount of 20-70 parts by weight, preferably 25-65 parts by weight and especially 30-60 parts by weight.

As stated hereinbefore, the skin layer [I] used in the invention may be composed of a blend obtained by blending the above-mentioned partially crosslinked elastomer and a polyolefin (C) in a specific proportion. Concrete examples of the polyolefin resin (C) are the same polymers enumerated as the concrete examples of the above-mentioned polyolefin resin (B). A melt flow rate (ASTM-D-1238-65T, 230°C) is preferably 0.1-50 g/10 min, particularly 0.4-20 g/10 min.

The above-mentioned polyolefin resin (C) is used in an amount of 5-100 parts by weight, preferably 20-80 parts by weight based on 100 parts by weight of the above-mentioned partially crosslinked thermoplastic elastomer.

In the present invention, furthermore, it is desirable that there exists a difference [$(I_A)-(II_A)$] between the content ($I_A$) of the $\alpha$-olefin copolymer rubber (A) of the thermoplastic elastomer constituting the above-mentioned skin layer [I] and the content ($II_A$) of the $\alpha$-olefin copolymer rubber of the thermoplastic elastomer constituting the above-mentioned back surface layer [II]. The difference referred to above is usually 5-85 parts by weight, preferably 10-70 parts by weight and especially 15-50 parts by weight.

When the above-mentioned two kinds of thermoplastic elastomers having a difference in content of the $\alpha$-olefin copolymer rubber (A) as defined above is used, there are obtained two-layer sheets capable of giving molded products excellent in vacuum forming properties as well as in soft touch.

The thermoplastic elastomers which constitute the skin layer [I] and back surface layer [II] of the two-layer sheet of the invention may contain, besides the $\alpha$-olefin copolymer rubber (A) and polyolefin resin (B), a peroxide non-crosslinking type hydrocarbon rubbery material (D) and/or a mineral oil softener (E).

The peroxide non-crosslinking type hydrocarbon rubbery material (D) which may be used in the invention is a hydrocarbon rubbery material which does not crosslink even when mixed with peroxide and does not decrease in flowability, for example, such rubbery materials as polyisobutylene, butyl rubber (IIR), propylene/ethylene copolymer having the propylene content of 70 mol% or more, atactic polypropylene, etc. Of these rubbery materials exemplified above, particularly preferred are polyisobutylene and butyl rubber (IIR) from a standpoint of performance and handling.

The peroxide non-crosslinking type hydrocarbon rubbery material (D) has an effect of improving a thermoplastic elastomer composition in flowability, and particularly preferred are those having a Mooney viscosity [$ML_{1+4}$ (100°C)] of not more than 60.

In the present invention, the peroxide non-crosslinking type haydrocarbon rubbery material (D) is used in an amount of 5-100 parts by weight, preferably 10-50 parts by weight and especially 15-40 parts by weight based on the sum total 100 parts by weight of the $\alpha$-olefin copolymer rubber (A) and polyolefin resin (B).

The mineral oil softener (E) used in the invention is usually a high boiling petroleum fraction used for the purposes of weakening an intermolecular force of rubber molecules at the time when a rubber is processed by means of a roll and facilitating said rubber processing, helping the dispersion in the rubber of carbon black or white carbon used as a filler, or decreasing the vulcanized rubber in hardness and increasing said rubber in flexibility and elasticity, and these mineral oil softeners are classified into paraffin, naphthene and aromatic type.

In comparison with the molded products obtained from a thermoplastic elastomer composition containing a paraffinic mineral oil softener, the molded products obtained from a thermoplastic elastomer composition containing a naphthenic mineral oil softener are less in tackiness, and hence the naphthenic mineral oil softener is more preferably used in the invention than the paraffinic mineral oil softener.

In the present invention, the mineral oil softener (E) may be used in an amount of 5-100 parts by weight, preferably 10-80 parts by weight and especially 20-70 parts by weight based on the sum total amount of 100 parts by weight of the α-olefin copolymer rubber (A) and polyolefin resin (B).

In the present invention, furthermore, various additives may be added to the thermoplastic elastomer composition to such an extent that no object of the invention is marred, said additives including such fibrous filler as glass fiber, potassium titanate fiber, carbon fiber, etc.; polyolefin plastics such as high density polyethylene, medium density polyethylene, low density polyethylene, isotactic polypropylene, propylene/α-olefin copolymer, etc.; inorganic fillers such as calcium carbonate, calcium silicate, clay, talc, silica, diatomaceous earth, mica powder, asbestos, alumina, barium sulfate, aluminum sulfate, calcium sulfate, basic magnesium carbonate, molybdenum disulfide, graphite, glass bead, silica balloon, etc.; and colorant such as carbon black, titanium oxide, zinc white, iron oxide red, ultramarine blue, iron blue, azo pigment, nitroso pigment, lake pigment, phthalocyanine pigment, etc.

In the present invention, moreover, the thermoplastic elastomer composition may be mixed with known heat stabilizer, aging inhibitor, weathering stabilizer, such as phenol, sulfite, phenylalkane, phosphite or amine type stabilizer, antistatic agent, lubricant such as metallic soap or wax, in such an amount that they are usually used in polyolefin resin or α-olefin copolymer rubber.

When the partially crosslinked thermoplastic elastomer constituting the skin layer [I] of the two-layer sheet of the present invention is incorporated with a ultraviolet absorber, extinguishing agent and weathering stabilizer such as hindered amines, and also the **non-crosslinked** thermoplastic elastomer constituting the back surface layer [II] is incorporated with a flame retardant, there may be obtained a two-layer sheet of thermoplastic elastomer capable of providing a molded product excellent in light resistance and flame retardant and also free from bleedout which will mar greatly a commercial value of the resulting molded product.

However, it has heretofore been unable to inhibit an outbreak of bleedout even when a single-layer sheet of thermoplastic elastomer is incorporated with both the light stabilizer and flame retardant.

The light stabilizer and flame retardant mentioned above are not particularly limited in kind thereof so long as they are those which can be used in polyolefin thermoplastic elastomers.

Concrete examples of the light stabilizer includes hindered phenolic antioxidant represented by pentaerythritol-tetrakis [3-(3,5-di-t-butyl-4-hydroxyphenyl)propionate], or octadecyl-3-(3,5-di-t-butyl-4-hydroxyphenyl)propionate; and hindered amine type light stabilizer represented by bis(2,2,6,6-tetramethyl-4-piperidyl)sebacate.

The above-mentioned hindered amine type light stabilizer may also be used in combination with a benzothiazole type light stabilizer represented by 2-(3-t-butyl-5-methyl-2-hydroxyphenyl)-5-chlorobenzotriazole.

The above-mentioned hindered phenolic antioxidant and hindered amine type light stabilizer may be used, either singly or in combination.

In the present invention, the amount of the light stabilizer used is 0.01-0.3 phr, preferably 0.05-0.2 phr.

Concrete examples of the preferred flame retardant include inorganic flame retardant represented by antimony oxide or aluminum hydrooxide; and halogen type flame retardant represented by decabromodiphenyl ether or chlorinated polyethylene.

In the present invention, the amount of the inorganic flame retardant is 1-200 phr, preferably 5-150 phr, and that of the halogen type retardant is 10-100 phr, preferably 25-55 phr.

The partially crosslinked thermoplastic elastomer constituting the skin layer [I] may be obtained by carrying out dynamically heat treatment of a blend containing the aforesaid components in the presence of an organic peroxide, and allowing the blend to undergo crosslinking partially to the desired extent. By the expression "carrying out dynamically heat treatment" used herein is meant that the blend is kneaded in a molten state. Further, the blend of the partially crosslinked thermoplastic elastomer constituting the skin layer [I] and polyolefin resin (C) may be obtained by carrying out dynamically heat treatment of the partially crosslinked thermoplastic elastomer obtained in the manner mentioned above and the polyolefin resin (C).

While the **non-crosslinked** thermoplastic elastomer constituting the back surface layer [II] may be obtained by simply carrying out dynamically heat treatment of the blend of the aforesaid components.

In the present invention, extruders are used as kneading devices. Of the kneading devices, preferably used are closed type devices, and the kneading operation is carried out desirably in an inert gas atmosphere such as nitrogen or carbon dioxide. The kneading operation may be carried out at a temperature where a half-life period of the organic peroxide used becomes less than 1 minute, that is, usually 150°C, preferably 170-240°C for 1-20 minutes, preferably 1-10 minutes. The shearing force to be applied at that time in terms of shear rate is usually $10-10^4$ sec$^{-1}$, preferably $10^2-10^3$ sec$^{-1}$.

The organic peroxide used in the present invention at the time of preparing the partially crosslinked thermoplastic elastomer includes concretely dicumyl peroxide, di-t-butylperoxide, 2,5-dimethyl-2,5-di-(tert-butylperoxy)hexane, 2,5-dimethyl-2,5-di-(tert-butylperoxy)hexine-3, 1,3-bis(tert-butylperoxyisopropyl)benzene, 1,1-bis(tert-butylperoxy)-3,3,5-trimethylcyclohexane, n-butyl-4,4-bis(tert-butylperoxy)valerate, benzoyl peroxide, p-chlorobenzoyl peroxide, 2,4-dichlorobenzoyl peroxide, tert-butylperoxybenzoate, tert-butylperoxyisopropyl carbonate, diacetylperoxide, lauroyl peroxide, tert-butylcumyl peroxide, etc.

Of these organic peroxides exemplified above, preferred from the standpoint of odor and scratch stabilization are 2,5-dimethyl-2,5-di(tert-butylperoxy)hexane, 2,5-dimethyl-2,5-di(tert-butylperoxy)hexine-3, 1,3-bis(tert-butylperoxyisopropyl)benzene, 1,1-bis(tert-butylperoxy)-3,3,5-trimethylcyclohexane and n-butyl-4,4-bis(tert-butylperoxy)valerate, and most preferred is 1,3-bis(tert-butylperoxyisopropyl)benzene.

The amount of this organic peroxide to be used is 0.05-3%, preferably 0.1-1% by weight and especially 0.1-0.5% by weight based on the total sum of the above-mentioned components (A), (B) and (C). By the use in the thermoplastic elastomer composition of this organic peroxide in an amount as defined above, the resulting partially crosslinked thermoplastic elastomer will come to have satisfactory rubber-like properties such as heat resistance, tensile characteristics, elastic recovery and impact resilience, and an excellent moldability.

In practicing the partial crosslinking treatment in the present invention by the use of the organic peroxide mentioned above, there can be added to the treatment system such crosslinking assistant as sulfur, p-quinone dioxime, p,p'-dibenzoylquinone dioxime, N-methyl-N,4-dinitrosoaniline, nitrobenzene, diphenyl guanidine, trimethylolpropane-N,N'-m-phenylenemaleimide, etc., divinylbenzene, triallyl cyanurate, polyfunctional methacrylate monomer such as ethylene glycol dimethacrylate, diethylene glycol dimethacrylate, polyethylene glycol dimethacrylate, trimethylolpropane trimethacrylate, allyl methacrylate, etc., or polyfunctional vinyl monomer such as vinyl butyrate or vinyl stearate. By the addition to the system of such a compound as mentioned above, a uniform and mild crosslinking reaction may be expected. Particularly, in the present invention, the use of divinylbenzene is most preferable, because this divinylbenzene is easy to handle, compatible with the $\alpha$-olefin copolymer rubber and polyolefin resin which are the main ingredients of the aforesaid material to be treated, has organic peroxide solubilizing action and serves as a dispersant of peroxide, and hence a crosslinking effect obtained by heat treatment is uniform, thereby obtaining compositions well balanced between flow behavior and physicals. In the invention, such crosslinking assistant or polyfunctional vinyl monomer as mentioned above is preferably used in an amount of 0.1-2% by weight, preferably 0.3-1% by weight, based on the whole material to be treated, and by the use of such crosslinking assistant or polyfunctional vinyl monomer in an amount as defined above, there are obtained compositions which are excellent in flow behavior and do not bring about change in physicals owing to heat history at the time when said compositions processed and molded.

Further, in order to accelerate decomposition of the organic peroxide, there may be used tertiary amine such as triethylamine, tributylamine, 2,4,6-tris(dimethlamino)phenol, etc., or naphthenate of aluminum, cobalt, vanadium, copper, calcium, zirconium, manganese, magnesium, lead, mercury, etc.

By the dynamic heat treatment in the presence of the organic peroxide as mentioned above, there may be carried out the desired partial crosslinking.

In this connection, by the term partially crosslinked thermoplastic elastomer as used in the invention is meant that the gel content, as measured by the following method, of said partially crosslinked thermoplastic elastomer is more than 20%, preferably 20-99.5% and especially 45-98%.

Measurement of gel content

A test specimen weighing 100 mg of the thermoplastic elastomer was cut into segments, 0.5 mm x 0.5 mm x 0.5 mm, and after immersing said segments in 30 ml of cyclohexane in a closed container at 23°C for 48 hours, the specimen is taken out on a filter paper and dried at room temperature for more than 72 hours until a constant weight is reached.

A weight of all cyclohexane-insoluble components (fibrous filler, filler, pigment, etc.) other than the polymer component and a weight of the polyolefin resin component present in the specimen prior to the immersion in cyclohexane are deducted from a weight of the thus dried residue to obtain a balance which is then taken as "the corrected final weight (Y)".

On the other hand, a weight of the $\alpha$-olefin copolymer rubber present in the specimen, that is, a balance obtained by deducting from the weight of the specimen prior to the immersion (1) a weight of the cyclohexane-insoluble components other than the $\alpha$-olefin copolymer rubber (e.g. mineral oil or plasticizer), (2) a weight of the polyolefin resin, and (3) a weight of the cyclohexane-insoluble components other than the polymer component (fibrous filler, filler, pigment etc.), is taken as "the corrected initial weight (X).

Thus the gel content is obtained by means of the following equation.

$$\text{Gel content (\% by weight)} = \frac{\text{the corrected final weight (Y)}}{\text{the corrected initial weight (X)}} \times 100$$

In the present invention, the light stabilizer and flame retardant are mixed with the aforesaid thermoplastic elastomer in a process of preparing the same.

A thickness of the skin layer [I] of the molded body preferably obtained by vacuum forming is usually 0.01-50 mm, preferably 0.10-20 mm, and a thickness of the **back surface layer [II] composed of the non-crosslinked thermoplastic** elastomer is usually 0.01-100 mm, preferably 0.10-50 mm.

The two-layer sheets of thermoplastic elastomer of the present invention may be obtained, for example, according to known extrusion laminating technique or injection molding laminating technique.

For example, it is possible to obtain the two-layer sheet of thermoplastic elastomer of the invention by subjecting two kinds of sheets formed in advance which become the skin layer [I] and the back surface layer of the two-layer sheet, respectively, to hot melt adhesion using a calendering roll, compression molding machine, etc. at a temperature at which at least one of the two sheets fuses.

Furthermore, it is also possible to obtain the two-layer sheet of thermoplastic elastomer of the invention by allowing a sheet for the back surface layer [II] formed in advance to hot melt adhere to a sheet for the skin layer [I] by the extrusion or calender treatment.

In addition, it is also possible to obtain the two-layer sheet by allowing a sheet for the skin layer [I] formed in advance to hot melt adhere to a sheet for the back surface layer [II] by the extrusion or calender treatment.

The two-layer sheet according to the present invention comprising the skin layer [I] and the back surface layer [II] is usually used in a state that the skin layer [I] becomes a surface layer.

The two-layer sheet of thermoplastic elastomer of the invention is usually vacuum molded preferably together with other core material and capable of providing a molded body low in surface glossiness.

The two-layer sheets of thermoplastic elastomer of the present invention have such an effect as capable of providing molded bodies which are excellent in vacuum forming properties and also low in surface glossiness.

Further, the two-layer sheet of thermoplastic elastomer of the present invention gives soft feeling, flexible and warm feeling in appearance.

The two-layer sheets of thermoplastic elastomer of the invention having such effects as mentioned above may be widely used in applications of interior automotive trim such as instrument panel.

The present invention is illustrated below with reference to examples, but is should be construed that the invention is in no way limited to those examples.

First of all, shown below are methods for the evaluation of the two-layer sheets of thermoplastic elastomer and single-layer sheets of the thermoplastic elastomer of this two-layer sheet in vacuum forming properties (spreadability) and surface glossiness.

[Method of evaluation]

(1) Vacuum forming properties (spreadability)

The sheet is confirmed as to whether it will break or not at the time when said sheet is subjected to stretching by vacuum forming using a mold in a stretch ratio of 250% and 400%.

Vacuum forming conditions: The upper and lower heaters provided in the mold are heated so that a surface temprature of the sheets becomes 150°C.

(2) Surface glossiness

In evaluating a surface glossiness of the skin layer of the above-mentioned sheets obtained by vacuum forming, the sheets were measured, according to JIS-Z-8741, in gloss at an incident light angle of 60°, and the measured gloss was evaluated by the five-point rating test. In the present invention, its object is to provide molded bodies low in surface glossiness, and hence those having a lower gloss value are highly rated.

5     Sheets having a gloss value less than 4%
4     Sheets having a gloss value of 4 to 8%
3     Sheets having a gloss value of 8 to 12%
2     Sheets having a gloss value of 12 to 16%
1     Sheets having a gloss value of 16% or more

Example 1

First of all, pellets of two kinds of thermoplastic elastomers (hereinafter called "TPE (I) and TPE (II)" respectively) were prepared in the following manner.

Preparation of pellet of TPE (I)

With a Banbury mixer, (i) 35 parts by weight of an isotactic polypropylene resin [melt flow rate : 13 g/10 min (230°C)], (ii) 65 parts by weight of an ethylene/propylene/ethylidene norbornene terpolymer rubber [ethylene unit/propylene unit (mol ratio) : 78/22, iodine value : 15, Mooney viscosity [$ML_{1+4}$ (121°C)] : 61] and (iii) 30 parts by weight of a naphthene process oil were kneaded together in a nitrogen atmosphere at 180°C for 5 minutes, followed by cutting the resulting kneaded product into square pellets.

Subsequently, 100 parts by weight of the square pellets were kneaded together with 1 part by weight of a mixture comprising (iv) 20% by weight of 1,3-bis(tert-butylperoxyisopropyl)benzene, 30% by weight of divinylbenzene and 50 parts by weight of a paraffin mineral oil with a Henschel mixer, and extruded with an extruder in a nitrogen atmosphere at 220°C to prepare pellets of the thermoplastic elastomer [TPE (I)] . The gel content of the thus obtained was 92%.

Preparation of pellet TPE (II)

With a Banbury mixer, (i) 45 parts by weight of an isotactic polypropylene resin [melt flow rate : 13 g/10 min (230°C)], (ii) 55 parts by weight of an ethylene/propylene/ethylidene norbornene terpolymer rubber [ethylene unit/propylene unit (mol ratio) : 78/22, iodine value : 15, Mooney viscosity [$ML_{1+4}$ (121°C)] : 61] and (iii) 30 parts by weight of a naphthene process oil were kneaded together in a nitrogen atmosphere at 180°C for 5 minutes, followed by cutting the resulting kneaded product into square pellets.

Subsequently, the pellets thus obtained were extruded with an extruder in a nitrogen atmosphere at 220°C to prepare pellets of the **non-crosslinked** thermoplastic elastomer [TPE (II)]. The gel content of the pellets thus obtained was 8%.

Next, a skin sheet of the two-layer sheet was prepared from the above-mentioned TPE (I) in such a manner as mentioned below.

Preparation of TPE (I) sheet

The pellets of TPE (I) molten at 220°C were treated with a calender molding machine (manufactured by Nippon Roll K.K.) to obtain a thermoplastic elastomer sheet [TEP (I)] of 0.3 mm in thickness.

Preparation of two-layer sheet

The pellets of the above-mentioned TPE (II) molten at 220°C was coated by means of a calender molding machine [manufactured by Nippon Roll K.K.] on the back surface of the aforesaid TPE (I) sheet to obtain a two-layer sheet of thermoplastic elastomer of 0.9 mm in thickness.

The two-layer sheet of thermoplastic elastomer thus obtained was evaluated according to the aforesaid method of evaluation in vacuum forming properties and surface glossiness.

Results obtained are shown in Table 1.

Example 2

A thermoplastic elastomer sheet of 0.3 mm in thickness was prepared by repeating the same procedure of preparation of TEP (I) sheet as in Example 1, except that 70 parts by weight of pellets of TPE (I) and 30 parts by weight of a low pressure low density polyethylene (density : 0.920 g/cm$^3$, melt flow rate : 2.1 g/10 min) hereinafter called PE (I) was used instead of TPE (I). Subsequently, the sheet thus obtained was treated in the same manner in Example 1 to obtain a two-layer sheet of thermoplastic elastomer of 0.9 mm in thickness.

The two-layer sheet of thermoplastic elastomer thus obtained was evaluated, according to the afore-mentioned method of evaluation, in vacuum forming properties and surface glossiness.

Results obtained are shown in Table 1.

Comparative Example 1

In the same manner as in Example 1, a single-layer sheet was obtained composed of the thermoplastic elastomer [TPE (I)].

This single-layer sheet was evaluated, according to the aforementioned method of evaluation, in vacuum forming properties and surface glossiness.

Results obtained are shown in Table 1.

Comparative Example 2

Example 1 was repeated except that instead of the pellets of the aforesaid TPE (I), the pellets of the above-mentioned TEP (II) was used, to obtain a single-layer sheet composed of the thermoplastic elastomer [TPE (II)].

This single-layer sheet was evaluated, according to the aforementioned method of evaluation, in vacuum forming properties and surface glossiness.

Results obtained are shown in Table 1.

Comparative Example 3

The same procedure as in the preparation of TPE (I) sheet of Example 1, was repeated, except that 70 parts by weight of the pellets of TPE (I) and 30 parts by weight of PE (I) were used to obtain a single-layer sheet having 0.9 mm in thickness.

The thermoplastic elastomer single-layer sheet was evaluated, according to the aforementioned method of evaluation, in vacuum forming properties and surface glossiness.

Results obtained are shown in Table 1.

Table 1

| | Example 1 | Example 2 | Comparrative Example 1 | Comparative example 2 | Comparative Example 3 |
|---|---|---|---|---|---|
| Constitution of molded body obtained by vacuum forming | Skin layer TPE (I) | Skin layer TPE (I) PE (I) | Single-layer TPE (I) | Single-layer TPE (II) | Single-layer TEP (I) PE (I) |
| | Back surface layer TPE (II) | Back surface layer TPE (II) | | | |
| Vacuum forming at 250% stretching | No breakage | No breakage | Broken | No breakage | No Breakage |
| Vacuum forming at 400% stretching | No breakage | No breakage | Broken | No breakage | Broken |
| Surface glossiness | 5 | 4 | 5 | 2 | 4 |
| (Note) The amounts of TPE (I) and PE (I) used in Example 2 and Comparative Example 3, respectively, were 70 parts by weight and 30 parts by weight. | | | | | |

**Claims**

1.   A two-layer thermoplastic elastomer sheet comprising:

a partially crosslinked skin layer [I] comprising an α-olefin copolymer rubber (A) and a polyolefin resin (B) in a weight ratio of (A):(B) from 90:10 to 40:60; and
a non-crosslinked back surface layer [II] comprising an α-olefin copolymer rubber (A'), which is the same as or different to α-olefin copolymer rubber (A), and a polyolefin resin (B'), which is the same as or different to polyolefin resin (B), in a weight ratio of (A'):(B') from 80:20 to 30:70.

2.   A two-layer thermoplastic elastomer sheet comprising:

a partially cross-linked skin layer [I] comprising a partially cross-linked thermoplastic elastomer comprising an α-olefin copolymer rubber (A) and a polyolefin resin (B), in a weight ratio of (A):(B) from 90:10 to 40:60, blended with a polyolefin resin (C) in an amount from 5% to 100% by weight of the total amount of (A) and (B); and

a non-crosslinked back surface layer [II] comprising an α-olefin copolymer rubber (A'), which is the same as or different to α-olefin copolymer rubber (A), and a polyolefin resin (B'), which is the same as or different to polyolefin resin (B), in a weight ratio of (A'):(B') from 80:20 to 30:70.

3. A sheet according to claim 1 or 2 wherein the α-olefin copolymer rubber (A) or (A') has a Mooney viscosity $[ML_{1+4}(100°C)]$ from 40 to 80, and an iodine value of not more than 16.

4. A sheet according to any one of the preceding claims wherein the polyolefin resin (B) or (B') has a melt flow rate from 5 to 50 g/10 min.

5. A sheet according to any one of the preceding claims wherein the difference $[(I_A)-(II_A)]$ between the weight percentage $(I_A)$ of the α-olefin copolymer rubber (A) relative to the total weight of α-olefin copolymer rubber (A) and polyolefin resin (B) in the skin layer [I] and the weight percentage $(II_A)$ of the α-olefin copolymer rubber (A') relative to the total weight of α-olefin copolymer rubber (A') and polyolefin resin (B') in the back surface layer [II] is from 5 to 85.

6. A sheet according to any one of the preceding claims wherein the skin layer [I] or back surface layer [II] comprises a peroxide non-crosslinking hydrocarbon rubbery substance (D).

7. A sheet according to claim 6 wherein the peroxide non-crosslinking rubbery substance (D) is polyisobutylene or butyl rubber.

8. A sheet according to any one of the preceding claims wherein the skin layer [I] or the back surface [II] comprises a mineral oil softener (E).

9. A sheet according to claim 8 wherein the mineral oil softener (E) is a naphthenic mineral oil softener.

10. A sheet according to any one of the preceding claims wherein the skin layer [I] comprises a light stabilizer and the back surface layer [II] comprises a flame retardant.

11. A sheet according to any one of the preceding claims wherein the gel content of the thermoplastic elastomer constituting the skin layer [I] is from 20 to 99.5%.

12. A molded product obtainable by molding a sheet as claimed in any one of the preceding claims, and optionally shaping the molded sheet thus produced.

**Patentansprüche**

1. Zweischichtige, thermoplastische Elastomerfolie, umfassend:

eine partiell vernetzte Hautschicht [I], umfassend einen α-Olefin-Copolymerkautschuk (A) und ein Polyolefinharz (B) in einem Gewichtsverhältnis (A) : (B) von 90 : 10 bis 40 : 60; und

eine nicht-vernetzte Rückseitenschicht [II], umfassend einen α-Olefin-Copolymer-kautschuk (A'), welcher gleich oder unterschiedlich zum α-Olefin-Copolymerkautschuk (A) ist, und ein Polyolefinharz (B'), welches gleich oder unterschiedlich zum Polyolefinharz (B) ist, in einem Gewichtsverhältnis von (A') : (B') von 80 : 20 bis 30 : 70.

2. Zweischichtige, thermoplastische Elastomerfolie, umfassend:

eine partiell vernetzte Hautschicht [I], umfassend ein partiell vernetztes, thermoplastisches Elastomer, das einen α-Olefin-Copolymerkautschuk (A) und ein Polyolefinharz (B) in einem Gewichtsverhältnis von (A) : (B) von 90 : 10 bis 40 : 60 beinhaltet, vermischt mit einem Polyolefinharz (C) in einer Menge von 5 bis 100 Gew.-% der gesamten Menge von (A) und (B); und

eine nicht-vernetzte Rückseitenschicht [II], umfassend einen α-Olefin-Copolymerkautschuk (A'), welcher gleich oder unterschiedlich zum $\alpha$-Olefin-Copolymerkautschuk (A) ist, und ein Polyolefinharz (B'), welches gleich oder unterschiedlich zum Polyolefinharz (B) ist, in einem Gewichtsverhältnis von (A') : (B') von 80 : 20 bis 30 : 70.

3. Folie gemäß Anspruch 1 oder 2, worin der $\alpha$-Olefin-Copolymerkautschuk (A) oder (A') eine Mooney-Viskosität [$ML_{1+4}$(100 °C] von 40 bis 80 und eine Iodzahl von nicht mehr als 16 besitzt.

4. Folie gemäß einem der vorhergehenden Ansprüche, worin das Polyolefin (B) oder (B') eine Schmelzflußrate von 5 bis 50 g/10 min aufweist.

5. Folie gemäß einem der vorhergehenden Ansprüche, worin die Differenz [$(I_A)$-$(II_A)$] zwischen dem Gewichtsprozentwert ($I_A$) des $\alpha$-Olefin-Copolymerkautschuks (A), bezogen auf das Gesamtgewicht vom $\alpha$-Olefin-Copolymerkautschuk (A) und Polyolefinharz (B) in der Hautschicht [I], und dem Gewichtsprozentwert ($II_A$) des $\alpha$-Olefin-Copolymerkautschuks (A'), bezogen auf das Gesamtgewicht von $\alpha$-Olefin-Copolymerkautschuk (A') und Polyolefinharz (B') in der Rückseitenschicht [II], 5 bis 85 beträgt.

6. Folie gemäß einem der vorhergehenden Ansprüche, worin die Hautschicht [I] oder Ruckseitenschicht [II] eine nicht durch Peroxid vernetzbare, kautschukartige Kohlenwasserstoffsubstanz (D) umfaßt.

7. Folie gemäß Anspruch 6, worin die nicht durch Peroxid vernetzbare, kautschukartige Substanz (D) Polyisobutylen oder Butylkautschuk ist.

8. Folie gemäß einem der vorhergehenden Ansprüche, worin die Hautschicht [I] oder die Rückseitenschicht [II] ein Mineralölweichmacher (E) beinhaltet.

9. Folie gemäß Anspruch 8, worin der Mineralölweichmacher (E) ein naphthenischer Mineralölweichmacher ist.

10. Folie gemäß einem der vorhergehenden Ansprüche, worin die Hautschicht [I] einen Lichtstabilisator umfaßt und die Rückseitenschicht [II] ein Flammhemmittel umfaßt.

11. Folie gemäß einem der vorherigen Ansprüche, worin der Gelgehalt des die Hautschicht [I] aufbauenden thermoplastischen Elastomeren 20 bis 99,5 % beträgt.

12. Geformtes Produkt, erhältlich durch Formen einer Folie gemäß einem der vorhergehenden Ansprüche und gegebenenfalls Verformen bzw. Gestalten der derart hergestellten geformten Folie.

## Revendications

1. Feuille à deux couches en élastomère thermoplastique, comprenant :

   une couche de peau partiellement réticulée [I] comprenant un caoutchouc copolymère d'$\alpha$-oléfine (A) et une résine polyoléfine (B) en un rapport pondéral de (A):(B) allant de 90:10 à 40:60 ; et
   une couche superficielle arrière non-réticulée [II] comprenant un caoutchouc copolymère d'$\alpha$-oléfine (A') qui est identique ou différent du caoutchouc copolymère d'$\alpha$-oléfine (A), et une résine polyoléfine (B') qui est identique ou différente de la résine polyoléfine (B), en un rapport pondéral de (A'):(B') allant de 80:20 à 30:70.

2. Feuille à deux couches en élastomère thermoplastique, comprenant :

   une couche de peau partiellement réticulée [I] comprenant un élastomère thermoplastique partiellement réticulé comprenant un caoutchouc copolymère d'$\alpha$-oléfine (A) et une résine polyoléfine (B) en un rapport pondéral de (A):(B) allant de 90:10 à 40:60, mélangé à une résine polyoléfine (C) en une quantité de 5 % à 100 % en poids de la quantité totale de (A) et (B) ; et
   une couche superficielle arrière non-réticulée [II] comprenant un caoutchouc copolymère d'$\alpha$-oléfine (A') qui est identique ou différent du caoutchouc copolymère d'$\alpha$-oléfine (A), et une résine polyoléfine (B') qui est identique ou différente de la résine polyoléfine (B), en un rapport pondéral de (A'):(B') allant de 80:20 à 30:70.

3. Feuille selon la revendication 1 ou 2, dans laquelle le caout-chouc copolymère d'$\alpha$-oléfine (A) ou (A') présente une viscosité Mooney [$ML_{1+4}$(100° C)] allant de 40 à 80, et un indice d'iode ne dépassant pas 16.

**4.** Feuille selon l'une quelconque des précédentes revendications, dans laquelle la résine polyoléfine (B) ou (B') présente un indice de fluidité à chaud de 5 à 50 g/10 min.

**5.** Feuille selon l'une quelconque des précédentes revendications, dans laquelle la différence $[(I_A)-(II_A)]$ entre le pourcentage pondéral $(I_A)$ du caoutchouc copolymère d'$\alpha$-oléfine (A) par rapport au poids total du caoutchouc copolymère d'$\alpha$-oléfine (A) et de la résine polyoléfine (B) dans la couche de peau [I], et le pourcentage pondéral $(II_A)$ du caout-chouc copolymère d'$\alpha$-oléfine (A') par rapport au poids total du caout-chouc copolymère d'$\alpha$-oléfine (A') et de la résine polyoléfine (B') dans la couche superficielle arrière [II], est comprise entre 5 et 85.

**6.** Feuille selon l'une quelconque des précédentes revendications, dans laquelle la couche de peau [I] ou la couche superficielle arrière [II] comprend une substance caoutchouteuse hydrocarbonée (D) ne réticulant pas avec un peroxyde.

**7.** Feuille selon la revendication 6, dans laquelle la substance caoutchouteuse hydrocarbonée (D) ne réticulant pas avec un peroxyde est un caoutchouc butyle ou un polyisobutylène.

**8.** Feuille selon l'une quelconque des précédentes revendications, dans laquelle la couche de peau [I] ou la couche superficielle arrière [II] comprend un adoucissant de type huile minérale (E).

**9.** Feuille selon la revendication 8, dans laquelle l'adoucissant de type huile minérale (E) est un adoucissant de type huile minérale naphténique.

**10.** Feuille selon l'une quelconque des précédentes revendications, dans laquelle la couche de peau [I] comprend un stabilisant à la lumière et la couche superficielle arrière [II] comprend un agent retardateur de flamme.

**11.** Feuille selon l'une quelconque des précédentes revendications, dans laquelle la teneur en gel de l'élastomère thermoplastique constituant la couche de peau [I] vaut de 20 à 99,5 %.

**12.** Produit moulé pouvant être obtenu par moulage d'une feuille conforme l'une quelconque des précédentes revendications, et par façonnage éventuel de la feuille moulée ainsi produite.